# EUROPEAN PATENT APPLICATION

(11) **EP 1 180 899 A2**
(43) Date of publication of application: **20.02.2002**
(21) Application number: 01306704.6
(22) Date of filing: 06.08.2001
(51) Int. Cl.: H04N 5/445

(54) **Improvements to electronic programme guide**

(30) Priority: 08.08.2000 GB 0019318
(71) Applicant: Pace Micro Technology PLC, Shipley, West Yorkshire BD18 3LF (GB)
(72) Inventor: Matey, Jesus, Leeds, LS4 2SZ (GB); Bruscino, Carolyn, Deerfield Beach, FL33441 (US)
(74) Representative: Wood, Graham

(57) **Abstract**

A television system is provided including a display screen (4) and a broadcast data receiver (BDR) for the reception of data broadcast from a broadcaster at a remote location. The data received comprises video, audio and/or auxiliary data, and at least part of the data is processed by the BDR to generate an electronic programme guide (EPG). The EPG contains information relating to a range of programmes for viewing at that instant or in the future and is displayed on the display screen. The BDR is provided with a facility allowing a user to select to view from the EPG, for a pre-determined period of time, a visual display of each, or a predetermined selection, of the programmes available for viewing at that instant or for a particular time period in the future.

## Description

The invention to which this application relates is a television system which incorporates a broadcast data receiver for streams of data which are broadcast from a broadcast location to a number of broadcast data receivers at various premises throughout an area. The data is broadcast and carried by any of satellite, cable or terrestrial transmission systems and, when received, is processed by the broadcast data receivers to allow generation of video, audio and/or auxiliary data via a display screen and speakers, such as those incorporated into a television set.

With the advent of digital data technology in relation to broadcast systems, the number of channels which are available to be viewed and programmes thereon, at any one time, has proliferated. This means that the traditional referral to printed television programme schedules, such as those found in newspapers, magazines and the like, are now no longer capable of showing all of the programmes which are available to be selected at any one time or, furthermore, to show any significant information about the programmes.

This problem has lead to the development and adoption of what is known as an electronic programme guide (EPG) which is generated from auxiliary data received by the broadcast data receiver. The electronic programme guide is an on-screen display which can be used to display various options and modes of operation of a broadcast data receiver and, furthermore, programmes which are available to be viewed at a particular time at the same instant or in the future and through which pages of display the user can scroll, typically using a remote control device, to view programmes available and select a particular programme to be watched.

This form of EPG is relatively well-known and it is also possible upon the selection of a particular programme to obtain limited textual information relating to the programme subject matter which can help the user in deciding whether or not to select and watch that particular programme. However, very often this additional information is not of sufficient quantity to allow a user to make a decision.

As the EPG has evolved, it is now also possible to search through available programmes on a subject matter basis so that, the user can indicate to the broadcast data receiver, typically by the remote control, their interest in programmes in relation to particular subject matter. The broadcast data receiver can undertake a survey of available programmes, via information data which is broadcast along with the video/audio data, to identify those which relate to the subject matter indicated by the user. If any such programmes are identified, then these details are shown on the display screen in the form of textual information describing each of the programmes. However, in use, it is found that the information which is provided is not sufficient for the user to decide whether they want to watch a particular channel.

The aim of the present invention is to provide an improved method and system of allowing a user to ascertain the programme material which is available for viewing at any one time and then allow the user to select, on the basis of the invention, a particular programme which they wish to watch.

In a first aspect of the invention there is provided a television system including a display screen and a broadcast data receiver (BDR) for the reception of data broadcast from a broadcaster at a remote location, said data comprising any or any combination of video, audio and/or auxiliary data, at least part of said data being processed by the BDR to generate an electronic programme guide (EPG), said EPG containing information relating to a range of programmes available for viewing at that instant or in the future, and displaying said EPG on the display screen, characterised in that the BDR is provided with a facility allowing a user to select to view from the EPG, for a predetermined period of time, a visual display of each, or a predetermined selection, of the programmes available for viewing at that instant or for a particular time period in the future.

Typically the programmes are being shown on channels and the channels are available for selection using the facility.

In one embodiment, the period for which each programme can be viewed is a relatively short period of time, such as for example 5 seconds, and each of the programmes is shown in sequence for said predesignated time period

The pre-determined period of time can be selected by the user or determined by the broadcaster.

In one embodiment, the programmes for which the display is generated is each of the programmes which are available for viewing at the instant of the selection of the function.

In a further embodiment of the invention, the programmes which are scanned for viewing are a pre-selected number of programmes which can be selected in relation to any user or broadcast data receiver defined grouping. In a preferred embodiment the selection of the group of programmes is made on the basis of a user entered subject matter instruction so that from the programmes which are available at that time, those programmes which relate to the user defined subject, are identified and then each of the programmes which are identified in that group are displayed for a said predetermined period of time.

The ability to show each of the programmes selected for a relatively short period of time allows the user to immediately identify what programme they may decide to watch in terms of subject matter and/or quality of the programme material etc, and it is found that in practise, the ability to view the video image as an alternative or in addition to textual information is of considerably greater benefit to the user than using the conventional system of simply referring to textual information which is generated on screen.

In use, if the user identifies a particular programme which is being shown and wishes to watch the same then they may select the same at the time of the video display for that programme or may simply wait until all the programmes have been shown for the predetermined period of time and then select the programme of choice. It is envisaged that in addition to the video data, a caption will be generated which identifies the programme and/or programme details, such as the channel, the length of time the programme is to be shown for and/or the like, which is being shown at a predetermined period of time.

Typically, the selection of the function according to the invention, the selection of subject matter, if desired, and the selection of the particular programme to subsequently be viewed, can all be achieved via a remote control device used in conjunction with a broadcast data receiver.

In one particularly useful embodiment the user can select a number of channels which can be referred to as their preferred, favourite or most used channels, and upon selection of the scan function of this invention, the viewer can then view a portion of video for the predetermined period of time for each of the selected channels. Most users always watch a relatively uniform and constant group of channels. Thus in this embodiment the functionality of the system is the same but used for a different channel selection criteria to the other embodiments described herein.

According to a second aspect of the present invention there is provided a method of reviewing a number of programmes identified in an EPG, said EPG being generated from a broadcast data receiver for display on a display screen, said EPG containing information relating to a range of programmes for viewing at that instant or in the future, said method including the step of a user selecting to view, for a pre-determined period of time, all or a pre-determined selection, of programmes available for viewing at that instant or for a particular time period in the future, said BDR generating visual displays for each of said programmes in sequence for said pre-determined time periods.

Preferably the user then selects a particular programme based on the excerpts of the number of programmes displayed visually.

According to a further aspect of the present invention there is provided A broadcast data receiver (BDR), said BDR connected to or integrally formed with a display screen, said BDR receiving data from a broadcaster at a remote location, said data comprising any or any combination of video, audio and/or auxiliary data, at least part of said data being processed by the BDR to generate an electronic programme guide (EPG) containing information relating to a range of programmes for viewing at that instant or in the future and displaying said EPG on the display screen, characterised in that the BDR is provided with a facility allowing a user to select to view from the EPG, for a pre-determined period of time, a visual display for each, or a pre-determined selection, of the programmes available for viewing for a particular time period.

According to a yet further aspect of the present invention there is provided an electronic programme guide (EPG), said EPG being generated by a broadcast data receiver (BDR) for display on a display screen, said EPG containing information relating to a range of programmes for viewing at that instant or in the future, characterised in that a facility is provided by the BDR for selection by a user using the EPG allowing the user to select to view, for a pre-determined period of time, a visual display for each, or a pre-determined selection, of the programmes available for viewing for a particular time period.

A specific embodiment of the invention is now described with reference to the accompanying diagrams wherein:-
Figure 1 illustrates a menu display which can be generated at a first stage of the invention;
Figures 2a to 2c illustrate the video displays which can be generated in accordance with the invention; and
Figure 3 illustrates the programme which is finally selected for viewing by the user in accordance with the invention.

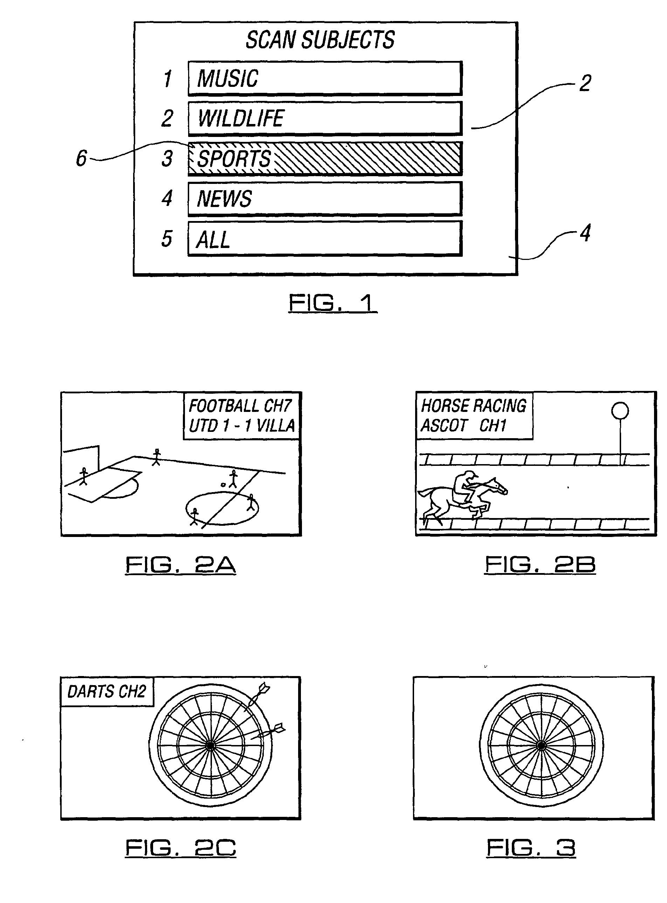

Referring now to Figure 1, there is shown an on-screen display 4 of a menu 2 of subject matter which can be generated by a broadcast data receiver connected to the on-screen display. The broadcast data receiver is provided to receive, process and generate video and audio and to allow the generation of programmes on, for example, a television set. In addition, auxiliary data can be received by the broadcast data receiver which allows other functions to be offered to the user. One of these functions is an electronic programme guide and it is envisaged that the display shown in Figure 1 will be generated as part of the electronic programme guide as follows.

Conventionally, when using a broadcast data receiver, a user is well versed in the use of a remote control device and to generate the display shown in Figure 1, the remote control device will be provided with a particularly identified button which may be entitled, for example, "scan". Upon depressing the button in accordance with the embodiment herein described, the display shown in Figure 1 will be generated. As will be seen, the display is a menu 2 indicating a range of subject matter. The user can then, via a remote control, decide to select one of the subject matter options indicated or alternatively may go for the final option which is "all" and simply means that all of the programmes available at that time can be selected. In this embodiment, the user has selected sports option 6 as being subject matter of interest. It may also be possible at this time for the user to select a particular period of time for which subsequent video images are to be generated from a particular programme and, if this is provided, then again the user can use the remote control device to select a particular time period.

In any case, upon receiving an indication that the user has selected the subject matter of sports, the broadcast data receiver refers to a series of information flags which are transmitted by the broadcaster for the data for each programme, and these flags serve to indicate to the broadcast data receiver the particular subject matter under which the programme falls. Thus, the broadcast data receiver in this instance scans all of the programmes which are available for viewing at the predesignated time to identify any which include the sports information flag. For those programmes which do include this flag, the broadcast data receiver proceeds to generate the video and possibly audio data for the same for sequential display on screen, as illustrated in Figures 2a, b and c. In this example, three programmes are identified under the sports heading, namely football as indicated in Figure 2a, horse racing as indicated in Figure 2b, and darts as indicated in Figure 2c. Thus, as shown in these figures, the video and audio for that programme is generated for a predesignated period of time, say 5 seconds, which allows the user to view the on-screen display, identify the sports to which the programme relates, and they can then do this for each of the available programmes for that subject matter at that time, in sequence.

In this example, the user is particularly interested in darts and therefore can choose, via the remote control, to select the darts programme at the time of display as shown in Figure 2c or alternatively, they can wait until the viewing of all the excerpts from the selected programmes is complete and then select the darts programme.

In order to aid the user to identify the programme shown, a caption can be generated as shown in each of Figures 2a, 2b and 2c which identifies the programme and channel. In a further embodiment, the caption can be enlarged to also display textual information relating to the programmes which are being shown for that period of time.

It is therefore found that in use, the ability to view the programme rather than having to refer simply to textual information is of considerable advantage to the user.

## Claims

1. A television system including a display screen (4) and a broadcast data receiver (BDR) for the reception of data broadcast from a broadcaster at a remote location, said data comprising any or any combination of video, audio and/or auxiliary data, at least part of said data being processed by the BDR to generate an electronic programme guide (EPG), said EPG containing information relating to a range of programmes available for viewing at that instant or in the future, and displaying said EPG on the display screen, **characterised in that** the BDR is provided with a facility allowing a user to select to view from the EPG, for a pre-determined period of time, a visual display of each, or a predetermined selection, of the programmes available for viewing at that instant or for a particular time period in the future.

2. A television system according to claim 1 **characterised in that** programmes viewed using the facility are shown in sequence, each for said pre-determined period of time.

3. A television system according to claim 1 **characterised in that** the pre-determined period of time for which each programme can be viewed is determined by the broadcaster.

4. A television system according to claim 1 **characterised in that** the pre-determined period of time for which each programme can be viewed is determined by the user.

5. A television system according to claim 1 **characterised in that** the programmes available for viewing using the facility are a number of programmes pre-selected in relation to any user and/or user defined groupings.

6. A television system according to claim 5 **characterised in that** the programmes being shown via the facility are based on the user's favourite channel and/or programme list.

7. A television system according to claim 1 **characterised in that** the programmes available for viewing using the facility are a number of programmes identified on the basis of user defined subject matter input into the system.

8. A television system according to claim 1 **characterised in that** the user is able to select a particular programme for watching subsequently at the time of the visual display for that programme being shown.

9. A television system according to claim 1 **characterised in that** the user is able to select a particular programme for watching subsequently after the display of all the programmes.

10. A television system according to claim 1 **characterised that** a textual message is generated on screen for each programme being shown via the facility to inform the user of details relating to each of the said programmes.

11. A television system according to claim 1 **characterised in that** any or any combination of selection of the facility, selection of the subject matter to which the programmes shown via the facility relate, selection of the pre-determined period of time for which the programmes are shown for and/or selection of a particular programme to subsequently be viewed, are achieved via a remote control device used in conjunction with the BDR.

12. A broadcast data receiver (BDR), said BDR connected to or integrally formed with a display screen (4), said BDR receiving data from a broadcaster at a remote location, said data comprising any or any combination of video, audio and/or auxiliary data, at least part of said data being processed by the BDR to generate an electronic programme guide (EPG) containing information relating to a range of programmes for viewing at that instant or in the future and displaying said EPG on the display screen, **characterised in that** the BDR is provided with a facility allowing a user to select to view from the EPG, for a pre-determined period of time, a visual display for each, or a pre-determined selection, of the programmes available for viewing for a particular time period.

13. An electronic programme guide (EPG), said EPG being generated by a broadcast data receiver (BDR) for display on a display screen (4), said EPG containing information relating to a range of programmes for viewing at that instant or in the future, **characterised in that** a facility is provided by the BDR for selection by a user using the EPG allowing the user to select to view, for a pre-determined period of time, a visual display for each, or a pre-determined selection, of the programmes available for viewing for a particular time period.

14. A method of reviewing a number of programmes identified in an EPG, said EPG being generated from a broadcast data receiver for display on a display screen, said EPG containing information relating to a range of programmes for viewing at that instant or in the future, said method including the steps of a user selecting to view, for a pre-determined period of time, all or a pre-determined selection, of programmes available for viewing at that instant or for a particular time period in the future, and said BDR generating visual displays for each of said programmes in sequence for said pre-determined time periods.
